# EUROPÄISCHE PATENTSCHRIFT

(11) **EP 3 898 354 B1**
(45) Veröffentlichungstag und Bekanntmachung des Hinweises auf die Patenterteilung: **27.09.2023**
(21) Anmeldenummer: 19829457.1
(22) Anmeldetag: 12.12.2019
(51) Int. Cl.: B60S 3/00, A47L 7/00, B25J 5/00, B25J 9/00, B25J 11/00, B25J 19/00

(54) **VERFAHREN ZUM REINIGEN EINES INNENRAUMS EINES FAHRZEUGS, REINIGUNGSROBOTER, POSITIONIERROBOTER UND SYSTEM**
METHOD FOR CLEANING AN INTERIOR OF A VEHICLE, CLEANING ROBOT, POSITIONING ROBOT AND SYSTEM
PROCÉDÉ DE NETTOYAGE D'UN HABITACLE D'UN VÉHICULE, ROBOT NETTOYEUR, ROBOT POSITIONNEUR ET SYSTEME

(30) Priorität: 20.12.2018 DE 102018222654
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: SCHÜTZ, Daniel, 38165 Lehre (DE); OTREMBA, Maik, 38118 Braunschweig (DE); HEROLD, Stephan, 38106 Braunschweig (DE); TORO RAMOS, Juan Mauricio, 38102 Braunschweig (DE); TOPPEL, Kristoph, 30173 Hannover (DE)
(86) Internationale Anmeldenummer: PCT/EP2019/084921
(87) Internationale Veröffentlichungsnummer: WO 2020/126830

(56) Entgegenhaltungen:
- WO-A1-2010/052318
- CN-U- 206 484 560
- DE-A1-102011 010 205
- US-A- 4 141 374
- US-A- 4 240 175

## Beschreibung

Die Erfindung betrifft ein Verfahren zum Reinigen eines Innenraums eines Fahrzeugs, einen Reinigungsroboter, einen Positionierroboter und ein System.

Der Innenraum eines Fahrzeugs verschmutzt mit fortschreitendem Gebrauch des Fahrzeugs. Hierbei sammeln sich insbesondere Staub und Schmutzpartikel auf Oberflächen in dem Innenraum des Fahrzeugs an und können sowohl ein Wohlbefinden als auch eine Gesundheit der Fahrzeuginsassen des Fahrzeugs beeinträchtigen. Dies ist insbesondere der Fall, wenn in dem Fahrzeug wechselnde Fahrzeuginsassen befördert werden, wie beispielsweise beim Carsharing oder Ridesharing.

Eine Reinigung des Innenraums des Fahrzeugs erfolgt in der Regel per Hand mittels eines Staubsaugers. Hierzu wird eine Ansaugdüse über Oberflächen im Innenraum geführt, vorhandener Staub und Schmutzpartikel werden weggesaugt und in einem Sammelbehälter aufgefangen. Dies ist zeitraubend und umständlich.

Aus der WO 01/37060 A1 ist ein mobiler Hausreinigungsroboter bekannt, der autonom arbeitet. Aus der US 2010/0106298 A1 ist ein autonom arbeitender Reinigungsroboter mit einem mehrgliedrigen Arm bekannt.

Aus der DE 101 10 373 A1 ist eine Reinigungsvorrichtung für den Innenraum eines Automobils mit einem angetriebenen Roboterarm mit einem ersten Reinigungswerkzeug und mit einer programmierbaren Steuerung des Roboterarm-Antriebs bekannt. Ferner ist aus der Druckschrift außerdem ein Reinigungsverfahren für den Innenraum eines Automobils bekannt, mit den Schritten: Einführen eines Reinigungswerkzeugs an einem programmgesteuerten angetriebenen Roboterarm in den Innenraum durch eine geöffnete Tür oder Klappe oder durch ein geöffnetes Fenster des Automobils und Führen des Reinigungswerkzeugs mittels des Roboterarms über eine zu reinigende Oberfläche des Innenraums.

Aus der DE 10 2011 010 205 A1 ist eine Vorrichtung zum Reinigen eines Kraftwagens, insbesondere eines Kraftwageninnenraumes, bekannt, mit einer Reinigungseinheit und wenigstens einem Lokomotionselement, mittels welchem die Vorrichtung autonom durch einen vorgegebenen zu reinigenden Bereich des Kraftwagens bewegbar ist.

Aus der DE 10 2016 009 585 A1 ist ein Reinigungsgerät für einen Innenraum eines Kraftwagens bekannt, mit einer Saugeinrichtung mit einer Steuereinheit und mit einem Gebläse zum Erzeugen eines Saugunterdrucks, welches wenigstens eine Verbindung mit einer kraftfahrzeugseitigen Einrichtung umfasst. Um den Komfort für den Nutzer zu erhöhen und dessen Zeitaufwand für die Reinigung eines Kraftwagens zu verringern, ist das Reinigungsgerät als automatisch betreibbarer Saugroboter ausgebildet, dessen Steuereinheit über wenigstens eine Steuerungsverbindung mit einer kraftfahrzeugseitigen Steuerungseinrichtung verbunden ist.

Aus der WO 2010/052318 A1 ist ein Wagen bekannt, mit einem vorderen Reinigungsblock in seinem oberen Abschnitt, einem hinteren Reinigungsblock, einer Rotationsdüse auf einer Seite davon und einer Rotationsdüse auf der anderen Seite und vertikalen Seitenrampen zusätzlich zu oder anstelle der Rotationsdüsen. Der Wagen umfasst ferner vier Untersetzungsmotoren für rotierende vordere und hintere Spülköpfe und die rotationsseitigen Düsen, eine Verbindung mit einer externen Flüssigkeitsquelle, Mittel zum Druckbeaufschlagen der Flüssigkeit, einen Waschprodukttank, einen Motor zum Antreiben der Antriebsräder, Führungselemente für den Wagen, Fahrsensoren für den Wagen, eine automatisierte Antriebseinheit, eine elektrische Energiequelle und/oder einen Anschluss an eine externe Stromversorgung.

Aus der US 4 240 175 ist eine Vorrichtung zum Waschen des Inneren eines länglichen, im Allgemeinen rechteckigen Frachtcontainers bekannt. Die Vorrichtung umfasst einen Waschwagen und einen Transferwagen, der dazu ausgelegt ist, den Waschwagen in Ausrichtung mit dem offenen Ende des Frachtcontainers zu tragen. Ein Steuersystem, das elektrische und hydraulische Schaltkreise enthält, bewirkt, dass der Waschwagen vom Transferwagen im Wesentlichen über die gesamte Länge des Frachtcontainers zurück auf den Transferwagen fährt. Der Waschwagen schrubbt und sprüht das Innere des Behälters während der Fahrt.

Aus der US 4 141 374 ist ein motorgetriebener Wagen bekannt. Dieser umfasst Düsen, um eine Reinigungslösung auf einer Fahrt nach innen in das Innere eines Anhängers zu leiten, und Mittel zum Stoppen der Bewegung des Wagens, wenn dieser sich der Vorderwand des Anhängers nähert. Die Rückreinigung wird verzögert, bis das Spülwasser die Reinigungslösung aus dem Versorgungsschlauch entfernt hat. Es werden verschiedene alternative Dockanordnungen beschrieben, bei denen das auf einem Wagen montierte Reinigungssystem zum Reinigen von Anhängern verwendet werden kann, die auf gegenüberliegenden Seiten des Docks gesichert sind oder für Anhänger, die entlang des Docks gefahren werden. Die Heizwasser- und Spülwasserversorgungs-, Speicher- und Heizsysteme werden ebenso beschrieben wie die Systeme zum Ermöglichen der Umwälzung von Wasser mit den verschiedenen Dockanordnungen. Schließlich wird ein System beschrieben, das die Ableitung von Wasser ermöglicht, das aus den Anhängern abfließt, ein Merkmal, das besonders wertvoll ist, wenn eine Vorspülung verschmutzter Anhänger aufgrund der Art der im Anhänger vor der Reinigung transportierten Materialien gewünscht oder erforderlich ist.

Der Erfindung liegt die Aufgabe zu Grunde, ein Verfahren zum Reinigen eines Innenraums eines Fahrzeugs, einen Reinigungsroboter, einen Positionierroboter und ein System zu schaffen, mit denen das Reinigen eines Innenraums eines Fahrzeugs verbessert durchgeführt werden kann.

Die Aufgabe wird erfindungsgemäß durch ein Verfahren mit den Merkmalen des Patentanspruchs 1, einen Reinigungsroboter mit den Merkmalen des Patentanspruchs 5, einen Positionierroboter mit den Merkmalen des Patentanspruchs 9 und ein System mit den Merkmalen des Patentanspruchs 11 gelöst.

Vorteilhafte Ausgestaltungen der Erfindung ergeben sich aus den Unteransprüchen. Insbesondere wird in einem ersten Aspekt der Erfindung ein Verfahren zum Reinigen eines Innenraums eines Fahrzeugs zur Verfügung gestellt, umfassend die Schritte: Einbringen mindestens eines Reinigungsroboters in den Innenraum des Fahrzeugs mittels mindestens eines Positionierroboters, wobei der mindestens eine Reinigungsroboter an einer vorgegebenen Position im Innenraum des Fahrzeugs angeordnet wird, Durchführen mindestens eines vorgegebenen Reinigungsprogramms mittels des mindestens einen Reinigungsroboters im Innenraum des Fahrzeugs, Entfernen des mindestens einen Reinigungsroboters aus dem Innenraum des Fahrzeugs mittels des mindestens einen Positionierroboters, wobei zum Einbringen und Entfernen mindestens ein Kopplungsmittel des mindestens einen Reinigungsroboters mit einem komplementären Kopplungsmittel des Positionierroboters auf lösbare Weise mechanisch verbunden wird.

In einem zweiten Aspekt der Erfindung wird insbesondere ein Reinigungsroboter zum Reinigen eines Innenraums eines Fahrzeugs geschaffen, umfassend mindestens ein Reinigungswerkzeug, mindestens ein Führungsmittel zum Führen des Reinigungswerkzeugs, und mindestens ein Kopplungsmittel, wobei das mindestens eine Kopplungsmittel derart ausgebildet ist, dass der Reinigungsroboter mit einem komplementären Kopplungsmittel eines Positionierroboters lösbar verbunden werden kann und von dem Positionierroboter an einer vorgegebenen Position im Innenraum des Fahrzeugs angeordnet werden kann.

In einem dritten Aspekt der Erfindung wird insbesondere ein Positionierroboter geschaffen, umfassend mindestens ein Führungsmittel zum Einbringen und Anordnen mindestens eines Reinigungsroboters an einer vorgegebenen Position in einem Innenraum eines Fahrzeugs, wobei das mindestens eine Führungsmittel mindestens ein komplementäres Kopplungsmittel umfasst, welches mit einem Kopplungsmittel des mindestens einen Reinigungsroboters auf lösbare Weise mechanisch verbunden werden kann.

In einem vierten Aspekt der Erfindung wird insbesondere ein System zum Reinigen eines Innenraums eines Fahrzeugs geschaffen, umfassend mindestens einen Reinigungsroboter gemäß dem zweiten Aspekt der Erfindung und mindestens einen Positionierroboter gemäß dem dritten Aspekt der Erfindung. Demnach wird ein Reinigungssystem breitgestellt.

Es ist ein Grundgedanke der Erfindung, mindestens einen Reinigungsroboter mittels mindestens eines Positionierroboters in einen Innenraum eines Fahrzeugs einzubringen und den mindestens einen Reinigungsroboter im Innenraum an einer vorgegebenen Position anzuordnen. Zum Einbringen und Anordnen weist der Reinigungsroboter Kopplungsmittel auf. Komplementär zu diesen Kopplungsmitteln weist der Positionierroboter komplementäre Kopplungsmittel auf. Die Kopplungsmittel des Reinigungsroboters und des Positionierroboters können auf lösbare Weise mechanisch miteinander verbunden werden, sodass ein sicheres Einbringen und Anordnen des Reinigungsroboters in den Innenraum mittels des mindestens einen Führungsmittels des Positionierroboters möglich ist. Nach dem Anordnen wird die mechanische Verbindung zwischen den Kopplungsmitteln wieder gelöst. Der Reinigungsroboter kann dann unabhängig von dem Positionierroboter im Innenraum arbeiten. An der vorgegebenen Position führt der Reinigungsroboter anschließend ein vorgegebenes Reinigungsprogramm mit Hilfe mindestens eines Reinigungswerkzeugs durch. Hierzu führt der Reinigungsroboter das mindestens eine Reinigungswerkzeug mit Hilfe mindestens eines Führungsmittels an die vorgesehenen Positionen im Innenraum des Fahrzeugs. Nach Durchführen des Reinigungsprogramms wird der Reinigungsroboter wieder aus dem Innenraum des Fahrzeugs entfernt. Hierzu wird erneut eine lösbare mechanische Verbindung zwischen den Kopplungsmitteln des Reinigungsroboters und des Positionierroboters ausgebildet, sodass der Positionierroboter den Reinigungsroboter mittels des mindestens einen Führungsmittels aus dem Innenraum heraustransportieren kann.

Der Vorteil der Erfindung ist, dass auch Positionen und Bereiche im Innenraum des Fahrzeugs, die schwer zugänglich sind, verbessert gereinigt werden können, da der mindestens eine Reinigungsroboter in kompakter Bauweise direkt an einer solchen Position oder in einem solchen Bereich angeordnet werden kann. Ferner ist es möglich, speziell ausgebildete Reinigungsroboter für schwer zugängliche Bereiche zu verwenden, sodass maßgeschneiderte Lösungen bereitgestellt werden können.

Es kann vorgesehen sein, dass der mindestens eine Reinigungsroboter nach Durchführen des vorgegebenen Reinigungsprogramms mindestens ein weiteres Mal im Innenraum neu angeordnet wird mittels des Positionierroboters, sodass an mindestens einer weiteren Position ein weiteres Reinigungsprogramm durchgeführt werden kann.

Ein Reinigungsroboter arbeitet insbesondere automatisiert, das heißt der Reinigungsroboter kann das vorgegebene Reinigungsprogramm selbständig und unabhängig von einer äußeren Steuerung durchführen. Hierzu weist der Reinigungsroboter insbesondere eine Steuerung auf, welche das Führen des Reinigungswerkzeugs steuert bzw. regelt. Ferner kann der Reinigungsroboter eine Sensorik zum Erfassen eines Umfelds im Innenraum des Fahrzeugs aufweisen, sodass der Reinigungsroboter selbständig in dem Umfeld arbeiten und das Reinigungsprogramm entsprechend auf die Gegebenheiten des Umfelds anpassen kann. Auf diese Weise können beispielsweise Schmutzpartikel und/oder Staub im Umfeld erkannt werden, sodass ein geeignetes Reinigungswerkzeug ausgewählt werden kann und die Schmutzpartikel und/oder der Staub anschließend entfernt werden können.

Ein Reinigungswerkzeug kann je nach Anwendungsszenario unterschiedlich ausgebildet sein. Es kann beispielsweise eine Düse zum Absaugen oder Einblasen von Luft oder einem anderen Gas oder Gasgemisch umfassen. Ferner kann das Reinigungswerkzeug auch mechanische Elemente aufweisen, wie Lamellen oder Noppen. Das Reinigungswerkzeug kann auch ein Reinigungstuch und/oder einen Reinigungsschwamm aufweisen. Es kann auch ein Magazin mit mehreren Reinigungswerkzeugen vorgesehen sein, wobei ein in dem Magazin vorgehaltenes Reinigungswerkzeug nach Bedarf bzw. in Abhängigkeit des jeweiligen Reinigungsprogramms aktiviert und verwendet wird.

Die komplementär ausgebildeten Kopplungsmittel des Reinigungsroboters und des Positionierroboters können als Klemm-, Rast- und/oder Schraubverbindung ausgebildet sein. Komplementär ausgebildet soll in diesem Zusammenhang bedeuten, dass eine mechanische Verbindung zwischen dem Reinigungsroboter und dem Positionierroboter hergestellt werden kann und die Kopplungsmittel hierzu auf lösbare Weise mechanisch miteinander verbunden werden können. Es kann beispielsweise vorgesehen sein, dass die komplementären Kopplungsmittel des Positionierroboters als lösbare Rastverbindung ausgebildet sind, welche mit den Kopplungsmitteln des Reinigungsroboters verrasten. Nach dem Einbringen und Anordnen wird die Rastverbindung wieder gelöst.

Die Kopplungsmittel und die komplementären Kopplungsmittel sind insbesondere derart ausgebildet, dass der Reinigungsroboter im angekoppelten Zustand in beliebiger Orientierung sicher transportiert werden kann.

Der Positionierroboter arbeitet insbesondere ebenfalls automatisiert, das heißt der Positionierroboter arbeitet selbständig und unabhängig von einer äußeren Steuerung. Hierzu weist der Positionierroboter insbesondere eine Steuerung auf, welche das Führen des Führungsmittels steuert bzw. regelt. Ferner kann der Positionierroboter eine Sensorik zum Erfassen eines Umfelds des Fahrzeugs bzw. eines Innenraums des Fahrzeugs aufweisen, sodass der Positionierroboter selbständig in dem Umfeld und im Innenraum arbeiten und sich an die Gegebenheiten des Umfelds und den Innenraum des Fahrzeugs anpassen kann.

Der mindestens eine Reinigungsroboter und der mindestens eine Positionierroboter sowie gegebenenfalls auch das Fahrzeug können über entsprechende Kommunikationsschnittstellen miteinander kommunizieren, um das Verfahren auszuführen und insbesondere das Koppeln, das Einbringen, das Anordnen und das Entfernen zu koordinieren. Die Kommunikationsschnittstelle kann drahtgebunden oder drahtlos sein. Beispielsweise können Wireless Local Area Network (WLAN), Bluetooth, der Controller Area Network (CAN)-Bus oder ein sonstiges Bussystem verwendet werden.

Ein typisches, jedoch beispielhaftes Anwendungsszenario wird im Folgenden beschrieben. Ein Fahrzeug soll gereinigt werden und fährt hierzu, insbesondere automatisiert, in ein Servicezentrum. Dort wird das Fahrzeug an einer vorgegebenen Position geparkt und die Fahrzeugtüren werden geöffnet. Der Positionierroboter verbindet sich über die komplementären Kopplungsmittel mit mindestens einem Reinigungsroboter und positioniert sich neben einer geöffneten Fahrzeugtür des Fahrzeugs. Der Positionierroboter bringt den mindestens einen Reinigungsroboter in den Innenraum des Fahrzeugs ein und ordnet diesen an einer vorgegebenen Position im Innenraum an. Anschließend wird die mechanische Verbindung zum Reinigungsroboter wieder gelöst und die Führungsmittel des Positionierroboters aus dem Innenraum entfernt. Der Reinigungsroboter führt nach dem Einbringen und Anordnen ein vorgegebenes Reinigungsprogramm durch. Beispielsweise kann ein Bereich des Innenraums durch Absaugen von Schmutzpartikeln und/oder Staub gereinigt werden. Nach dem Durchführen des Reinigungsprogramms verbindet sich der Positionierroboter mittels des komplementären Kopplungsmittels erneut mit dem Kopplungsmittel des Reinigungsroboters und entfernt diesen aus dem Innenraum des Fahrzeugs. Der Positionierroboter wird danach von dem Fahrzeug wegbewegt und die Fahrzeugtüren werden wieder geschlossen. Das Fahrzeug kann anschließend gereinigt weiterbetrieben werden und verlässt, insbesondere automatisiert gefahren, das Servicezentrum.

Ein Fahrzeug soll insbesondere ein Landfahrzeug, insbesondere ein Kraftfahrzeug sein. Insbesondere soll das Fahrzeug ein automatisiert gefahrenes Kraftfahrzeug sein. Ein Fahrzeug kann jedoch auch ein sonstiges Land-, Luft- oder Wasserfahrzeug sein, bei denen das Verfahren angewandt werden kann.

In einer Ausführungsform ist vorgesehen, dass der mindestens einen Reinigungsroboter automatisiert im Fahrzeug arbeiten kann. Der Reinigungsroboter ist insbesondere mobil ausgebildet, das heißt dass dieser sich nach dem Einbringen und Anordnen im Innenraum des Fahrzeugs bewegen kann. Hierzu kann der Reinigungsroboter beispielsweise eine mobile Plattform umfassen, welche beispielsweise mittels Rädern angetrieben wird. Der Reinigungsroboter kann sich dann beispielsweise auf einem ebenen Fahrzeugboden des Fahrzeugs bewegen und unterschiedliche Bereiche des Innenraums anfahren und reinigen. Alternativ hierzu kann der mindestens eine Reinigungsroboter auch stationär ausgebildet sein, sodass ein Aktionsradius durch das mindestens eine Führungsmittel des Reinigungsroboters begrenzt ist.

In einer Ausführungsform des Reinigungsroboters ist vorgesehen, dass das mindestens eine Führungsmittel einen Führungsarm umfasst. Dies kann insbesondere ein mehrgliedriger bzw. mehrgelenkiger Roboterarm mit sowohl rotatorischen als auch translatorischen Freiheitsgraden sein. Ist das mindestens eine Reinigungswerkzeug an einem Ende des Führungsarms angeordnet, so kann das Reinigungswerkzeug nahezu beliebig geführt, orientiert und positioniert werden. Die Möglichkeiten beim Reinigen sind hierdurch deutlich erhöht.

In einer Ausführungsform ist vorgesehen, dass das Einbringen des mindestens einen Reinigungsroboters in das Fahrzeug ein lösbares mechanisches Verbinden des mindestens einen Reinigungsroboters mittels eines Befestigungsmittels mit einem in dem Fahrzeug angeordneten komplementären Befestigungsmittel umfasst. Das komplementäre Befestigungsmittel kann beispielsweise als Klemm-, Rast- und/oder Schraubverbindung ausgebildet sein. Hierbei wird ein Reinigungsroboter beispielsweise mittels des Befestigungsmittels an einem komplementären Befestigungsmittel, welches an einer A- oder C-Säule des Fahrzeugs angeordnet ist, befestigt. Der Reinigungsroboter ist dann mechanisch dort fixiert, kann sicher arbeiten und mittels des Führungsmittels das Reinigungswerkzeug im Innenraum führen. Umfasst der Reinigungsroboter beispielsweise einen Führungsarm, so kann ein Ende des Führungsarms mittels des Befestigungsmittels an dem komplementären Befestigungsmittel des Fahrzeugs befestigt sein. Am anderen Ende des Führungsarms ist dann das Reinigungswerkzeug angeordnet und kann mittels des Führungsarms frei bewegt werden.

Bei einer Ausführungsform des Reinigungsroboters ist entsprechend vorgesehen, dass der Reinigungsroboter mindestens ein Befestigungsmittel umfasst, wobei das mindestens eine Befestigungsmittel derart ausgebildet ist, dass der Reinigungsroboter mit einem im Fahrzeug angeordneten komplementären Befestigungsmittel auf lösbare Weise mechanisch verbunden werden kann.

Entsprechend wird ein Fahrzeug geschaffen, umfassend mindestens ein in einem Innenraum des Fahrzeugs angeordnetes komplementäres Befestigungsmittel, wobei das komplementäre Befestigungsmittel derart ausgebildet ist, dass es an einem Befestigungsmittel eines Reinigungsroboters gemäß einer der beschriebenen Ausführungsformen befestigt werden kann. Das mindestens eine komplementäre Befestigungsmittel kann beispielsweise im oberen oder unteren Bereich einer A-, B- oder C-Säule des Fahrzeugs, an einem Fahrzeugdach, einem Fahrzeugboden oder auch in einem Kofferraum des Fahrzeugs angeordnet sein. Es können auch mehrere komplementäre Befestigungsmittel vorgesehen sein, sodass je nach Bedarf ein komplementäres Befestigungsmittel für einen Bereich des Innenraums des Fahrzeugs zur Verfügung steht. Im normalen Betrieb des Fahrzeugs kann vorgesehen sein, dass ein komplementäres Befestigungsmittel mit Hilfe einer Abdeckklappe oder einer Blende abgedeckt wird und daher für einen Fahrzeuginsassen nicht sichtbar ist.

In einer weiteren Ausführungsform ist vorgesehen, dass dem mindestens einen Reinigungsroboter von dem Fahrzeug über mindestens eine Schnittstelle Energie und/oder mindestens ein Reinigungsmedium und/oder eine Kommunikation mit dem Fahrzeug und/oder mindestens eine Entsorgung bereitgestellt wird. Auf diese Weise kann der Reinigungsroboter selbst klein und kompakt ausgebildet sein, da der Reinigungsroboter keine eigene Energieversorgung und/oder keine Reinigungsmedien und/oder keine Entsorgungseinrichtung, wie beispielsweise einen Staubsammelbehälter, aufweisen muss.

Die Energieversorgung kann insbesondere eine Strom- bzw. Spannungsversorgung umfassen. Ein Reinigungsmedium kann beispielsweise Druckluft, Abluft, Trockeneis, Reinigungsschaum oder ein Reinigungsgas etc. sein. Die Kommunikation kann beispielweise Steuersignale für den Reinigungsroboter und/oder das Fahrzeug umfassen, beispielsweise kann eine aktuelle Konfiguration des Innenraums des Fahrzeugs dem Reinigungsroboter mitgeteilt werden (z.B. in Bezug auf ein Vorhandensein und/oder eine aktuelle Position von Fahrzeugsitzen und/oder Tischen etc.). Es kann ferner vorgesehen sein, dass das Fahrzeug vollständig oder teilweise den Reinigungsroboter steuert bzw. regelt. Ebenso kann vorgesehen sein, dass der Reinigungsroboter das Fahrzeug zumindest teilweise steuert, z.B. um Fenster zu öffnen und zu schließen etc. Eine Entsorgung kann auch eine Abluft für abgesaugte Luft umfassen. Werden Polster im Innenraum des Fahrzeugs beispielsweise mittels eines Reinigungsschaums gereinigt, der anschließend abgesaugt wird, so kann der Reinigungsschaum als Reinigungsmedium über die Schnittstelle bereitgestellt werden und nach dem Absaugen über die Entsorgung entsorgt werden, beispielsweise zur späteren Entsorgung in einen Auffang- und Sammelbehälter des Fahrzeugs.

Insbesondere kann vorgesehen sein, dass die Schnittstelle am Ort der komplementären Befestigungsmittel ausgebildet ist. Hierbei werden zeitgleich mit Ausbilden der mechanischen Verbindung über die Befestigungsmittel die Verbindungen für die Energieversorgung und/oder das mindestens eine Reinigungsmedium und/oder die Kommunikation und/oder die Entsorgung ausgebildet, beispielsweise über entsprechende Steckverbindungen.

In einer Ausführungsform des Reinigungsroboters ist entsprechend vorgesehen, dass der Reinigungsroboter mindestens eine Schnittstelle zum Empfangen von Energie und/oder mindestens einem Reinigungsmedium und/oder einer Kommunikation mit dem Fahrzeug und/oder mindestens einer Entsorgung von dem Fahrzeug umfasst.

In einer Ausführungsform des Fahrzeugs ist entsprechend vorgesehen, dass das Fahrzeug mindestens eine Schnittstelle im Innenraum des Fahrzeugs umfasst, wobei die Schnittstelle derart ausgebildet ist, dem Reinigungsroboter eine Energie und/oder mindestens ein Reinigungsmedium und/oder eine Kommunikation mit dem Fahrzeug und/oder mindestens eine Entsorgung bereitzustellen.

In einer weiteren Ausführungsform ist vorgesehen, dass zusätzlich zum Reinigen des Innenraums mindestens eine weitere Tätigkeit im Innenraum des Fahrzeugs mittels des mindestens einen Reinigungsroboters durchgeführt wird. Beispielsweise kann vorgesehen sein, dass ein von einem zukünftigen Fahrzeuginsassen bestellter Gegenstand oder ein Geschenk im Innenraum des Fahrzeugs platziert werden. Ferner kann auch vorgesehen sein, dass ein Reinigungsroboter eine Konfiguration des Innenraums des Fahrzeugs verändert, beispielsweise können Sitze ein- oder ausgeklappt oder ein Tischkonfiguration geändert werden. Auch ein Wechseln von Sitzbezügen oder sonstigen Innenraumauskleidungen kann vorgesehen sein. Hierzu kann vorgesehen sein, dass der Reinigungsroboter ein geeignetes Werkzeug anstelle des Reinigungswerkzeugs aufnimmt und verwendet. Ebenso kann vorgesehen sein, dass Getränke und/oder Snacks etc. in dem Fahrzeug nachgefüllt und/oder ausgetauscht werden. Weiter können auch Reparaturen mittels des Reinigungsroboters durchgeführt werden, beispielsweise können defekte Displays ausgetauscht werden. Auch ein Ändern von Designelementen im Innenraum des Fahrzeugs kann vorgesehen sein, beispielsweise indem eine Innenverkleidung ausgetauscht oder verändert wird.

In einer Ausführungsform des Positionierroboters ist vorgesehen, dass der Positionierroboter eine bewegbare Basiseinrichtung umfasst, wobei das mindestens eine Führungsmittel auf der bewegbaren Basiseinrichtung angeordnet und mit dieser verbunden ist, sodass das mindestens eine Führungsmittel außerhalb des Fahrzeugs zusammen mit der Basiseinrichtung bewegt werden kann. Die bewegbare Basiseinrichtung kann beispielsweise Räder umfassen, auf denen der Positionierroboter um ein zu reinigendes Fahrzeug herum bewegt werden kann.

Es kann vorgesehen sein, dass der Positionierroboter ebenfalls mindestens ein Reinigungswerkzeug umfasst und/oder aufnehmen kann. Auf diese Weise kann beispielsweise während einer Innenraumreinigung auch eine äußere Reinigung des Fahrzeugs mittels des Positionierroboters durchgeführt werden. Ferner kann der Positionierroboter auch ein Betanken und/oder Aufladen des Fahrzeugs mit Treibstoff oder sonstigen Betriebsmitteln während des Reinigens des Innenraums durchführen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Reinigungsroboters;
- Fig. 2: eine schematische Darstellung einer Ausführungsform des Positionierroboters;
- Fig. 3: eine schematische Darstellung einer Ausführungsform eines Fahrzeugs mit komplementären Befestigungsmitteln;
- Fig. 4: eine schematische Darstellung einer Ausführungsform des Systems zum Reinigen eines Innenraums eines Fahrzeugs;
- Fig. 5: eine schematische Darstellung eines in einem Innenraum eines Fahrzeugs angeordneten Reinigungsroboters;
- Fig. 6: ein schematisches Ablaufdiagramm einer Ausführungsform des Verfahrens zum Reinigen eines Innenraums eines Fahrzeugs.

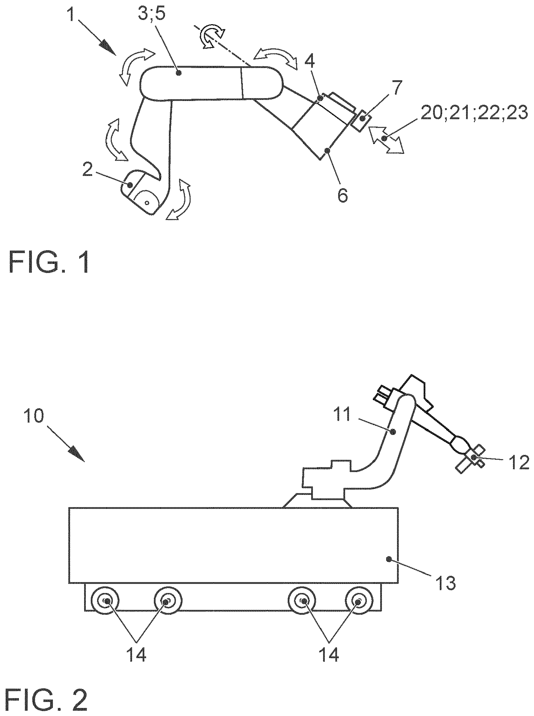

In Fig. 1 ist eine schematische Darstellung einer Ausführungsform des Reinigungsroboters 1 gezeigt. Der Reinigungsroboter 1 umfasst ein Reinigungswerkzeug 2, ein Führungsmittel 3 zum Führen des Reinigungswerkzeugs 2, und ein Kopplungsmittel 4. Das Führungsmittel 3 ist als Führungsarm 5 ausgebildet, der mehrere Gelenke und Glieder umfasst und mehrere rotatorische und translatorische Freiheitsgrade aufweist. Das Reinigungswerkzeug 2 ist beispielsweise als Saugeinrichtung und/oder Greifeinrichtung ausgebildet. Ferner umfasst der Reinigungsroboter 1 ein Befestigungsmittel 6.

Es kann vorgesehen sein, dass der Reinigungsroboter 1 eine Schnittstelle 7 zum Empfangen von Energie 20 und/oder mindestens einem Reinigungsmedium 21 und/oder einer Kommunikation 22 mit dem Fahrzeug und/oder mindestens einer Entsorgung 23 von dem Fahrzeug umfasst.

In Fig. 2 ist eine schematische Darstellung einer Ausführungsform des Positionierroboters 10 gezeigt. Der Positionierroboter 10 umfasst ein Führungsmittel 11, welches als mehrgliedriger und mehrgelenkiger Führungsarm ausgebildet ist. Das Führungsmittel 11 umfasst am äußeren Ende des Führungsarms ein komplementäres Kopplungsmittel 12. Ferner umfasst der Positionierroboter 10 eine bewegbare Basiseinrichtung 13. Das Führungsmittel 11 ist auf der bewegbaren Basiseinrichtung 13 angeordnet und mit dieser verbunden. Die bewegbare Basiseinrichtung 13 umfasst mehrere Räder 14. Mittels der bewegbaren Basiseinrichtung 13 kann das Führungsmittel 11 auf einem Untergrund um ein Fahrzeug herum bewegt und positioniert werden. Beispielsweise kann es neben eine Fahrzeugtür gefahren werden, sodass das Führungsmittel 11 in einen Innenraum des Fahrzeugs eingreifen kann.

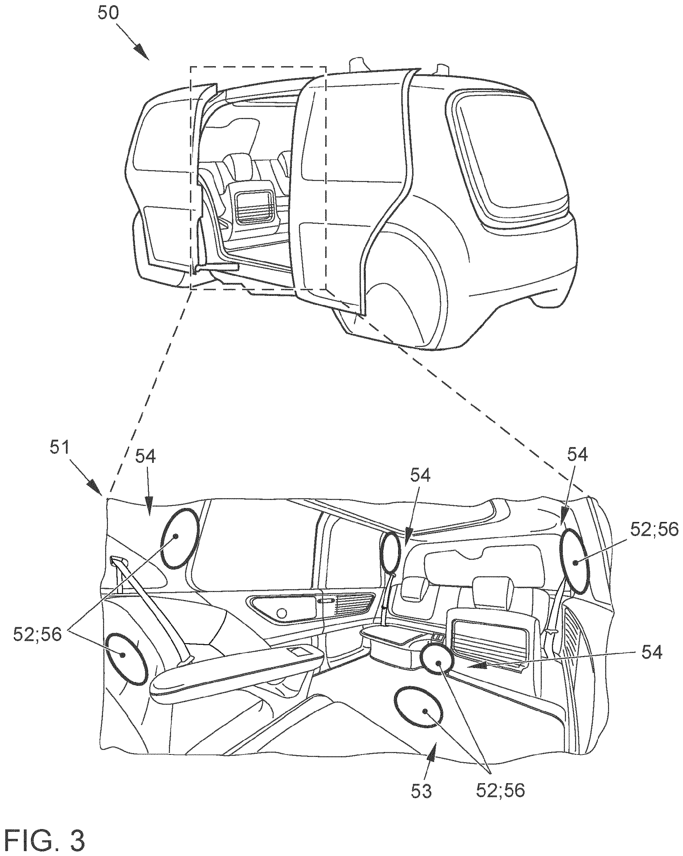

In Fig. 3 ist eine schematische Darstellung einer Ausführungsform eines Fahrzeugs 50 mit komplementären Befestigungsmitteln 52 in einem Innenraum 51 des Fahrzeugs 50 gezeigt. Das Fahrzeug 50 umfasst im Innenraum 51 mehrere komplementäre Befestigungsmittel 52, welche am Fahrzeugboden 53, an Säulen 54 und an einer Seite 55 des Innenraums 51 angeordnet sind.

Es kann zusätzlich vorgesehen sein, dass das Fahrzeug 50 Schnittstellen 56 im Innenraum 51 umfasst, wobei die Schnittstellen 56 einem Reinigungsroboter Energie und/oder mindestens ein Reinigungsmedium und/oder eine Kommunikation mit dem Fahrzeug und/oder mindestens eine Entsorgung bereitstellen. Die Schnittstellen 56 sind in der gezeigten Ausführungsform an den Positionen der komplementären Befestigungsmittel 52 ausgebildet, sodass bei einem mechanischen Verbinden eines Reinigungsroboters mit einem jeweiligen komplementären Befestigungsmittel 52 zeitgleich auch eine Schnittstellenverbindung mit dem jeweiligen Reinigungsroboter ausgebildet wird.

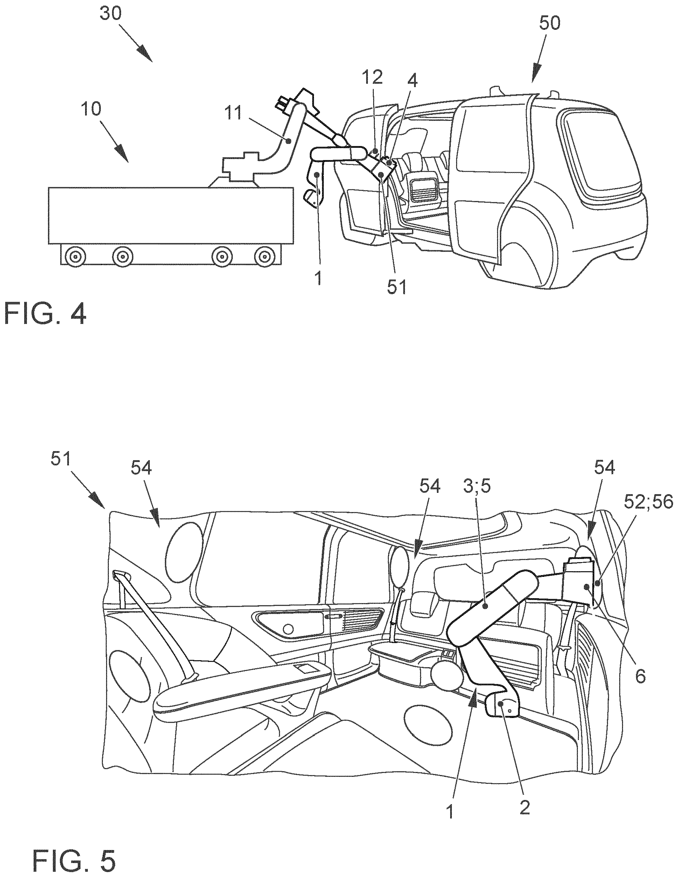

In Fig. 4 ist eine schematische Darstellung einer Ausführungsform des Systems 30 zum Reinigen eines Innenraums 51 eines Fahrzeugs 50 gezeigt. Das System 30 umfasst einen Reinigungsroboter 1, wie er beispielsweise in der Fig. 1 gezeigt ist. Ferner umfasst das System 30 einen Positionierroboter 10, wie er beispielsweise in der Fig. 2 gezeigt ist. Der Reinigungsroboter 1 ist mittels des Kopplungsmittels 4 mit einem komplementären Kopplungsmittel 12 des Positionierroboters 10 auf lösbare Weise mechanisch verbunden. Der Positionierroboter 10 bringt mittels des Führungsmittels 11 den angekoppelten Reinigungsroboter 1 in den Innenraum 51 des Fahrzeugs 50 ein und ordnet diesen an einer Säule 54 des Fahrzeugs 50 an (vgl. Fig. 5). Hierzu wird der Reinigungsroboter 1 mittels eines Befestigungsmittels 6 an einem komplementären Befestigungsmittel 52 des Fahrzeugs 50 mechanisch befestigt. Beispielsweise kann hierzu eine lösbare Rastverbindung ausgebildet werden, indem die Befestigungsmittel 6, 52 miteinander verrastet werden. Der Reinigungsroboter 1 ist anschließend mechanisch an der Säule 54 des Fahrzeugs 50 befestigt (vgl. Fig. 5). Die mechanische Verbindung der Kopplungsmittel 4, 12 wird anschließend wieder gelöst und das Führungsmittel 11 des Positionierroboters 10 aus dem Innenraum 51 des Fahrzeugs 50 entfernt.

Da das als Führungsarm 5 ausgebildete Führungsmittel 3 des Reinigungsroboters 1 einen großen Aktionsradius aufweist, kann zumindest ein Bereich des Innenraums 51 mittels des Reinigungswerkzeugs 2 des Reinigungsroboters 1 gereinigt, beispielsweise abgesaugt, werden. Hierzu führt der Reinigungsroboter ein vorgegebenes Reinigungsprogramm aus. Nach Abschluss des vorgegebenen Reinigungsprogramms führt der Positionierroboter 10 das Führungsmittel wieder in den Innenraum und verbindet die komplementären Kopplungsmittel 4, 12 wieder miteinander. Die Rastverbindung der komplementären Befestigungsmittel 6, 52 wird anschließend gelöst und der an das Führungsmittel 11 des Positionierroboters 10 gekoppelte Reinigungsroboter 1 wird wieder aus dem Innenraum 51 des Fahrzeugs 50 entfernt.

Es kann auch vorgesehen sein, dass der Reinigungsroboter 1 vor dem Entfernen an zumindest einer weiteren Position im Innenraum 51 des Fahrzeugs 50 angeordnet wird, beispielsweise an einer weiteren Säule 54, sodass ein weiterer Bereich des Innenraums 51 gereinigt werden kann.

Es kann vorgesehen sein, dass dem Reinigungsroboter 1 von dem Fahrzeug 50 über mindestens eine Schnittstelle 7, 56 Energie und/oder mindestens ein Reinigungsmedium und/oder eine Kommunikation mit dem Fahrzeug und/oder mindestens eine Entsorgung bereitgestellt wird. Hierzu wird die mindestens eine Schnittstelle 7 mit einer Schnittstelle 56 des Fahrzeugs 50 verbunden. Die Schnittstellen 7, 56 werden beispielsweise zeitgleich mit dem mechanischen Verbinden der komplementären Befestigungsmittel 4, 12 ausgebildet, beispielsweise durch Ausbilden von Steck- oder Rastverbindungen, welche die entsprechenden Zu- und/oder Ableitungen miteinander verbinden.

Es kann ferner vorgesehen sein, dass zusätzlich zum Reinigen des Innenraums 51 mindestens eine weitere Tätigkeit im Innenraum 51 des Fahrzeugs 50 mittels des mindestens einen Reinigungsroboters 1 durchgeführt wird. Beispielsweise kann vorgesehen sein, dass ein von einem zukünftigen Fahrzeuginsassen bestellter Gegenstand oder ein Geschenk im Innenraum des Fahrzeugs platziert wird. Ferner kann auch vorgesehen sein, dass ein Reinigungsroboter eine Konfiguration eines Innenraums des Fahrzeugs verändert. Beispielsweise können Sitze ein- oder ausgeklappt oder eine Tischkonfiguration geändert werden. Auch ein Wechseln von Sitzbezügen oder sonstigen Innenraumauskleidungen kann vorgesehen sein. Hierzu kann vorgesehen sein, dass der Reinigungsroboter ein geeignetes Werkzeug anstelle des Reinigungswerkzeugs aufnimmt und verwendet. Ebenso kann vorgesehen sein, dass Getränke und/oder Snacks etc. in dem Fahrzeug nachgefüllt und/oder ausgetauscht werden. Weiter können auch Reparaturen mittels des Reinigungsroboters durchgeführt werden, beispielsweise können defekte Displays ausgetauscht werden. Auch ein Ändern von Designelementen im Innenraum des Fahrzeugs kann vorgesehen sein, beispielsweise indem eine Innenraumverkleidung ausgetauscht oder verändert wird.

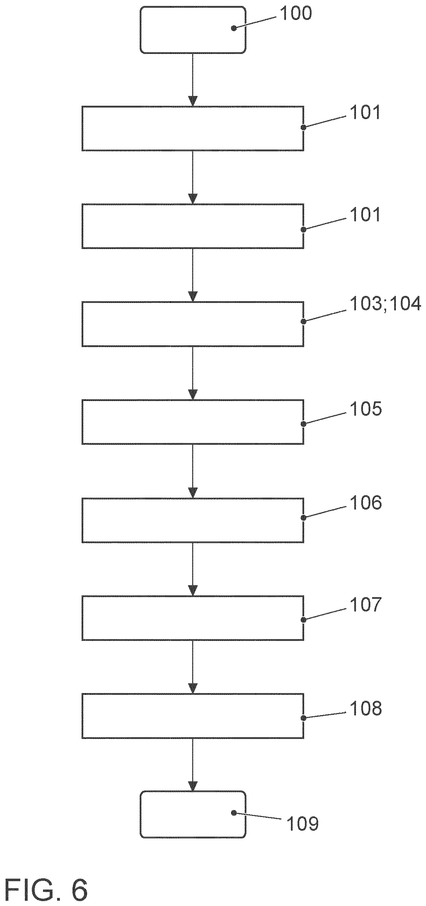

In Fig. 6 ist ein schematisches Ablaufdiagramm einer Ausführungsform des Verfahrens zum Reinigen eines Innenraums eines Fahrzeugs gezeigt.

In einer Ausgangssituation fährt ein Fahrzeug, insbesondere automatisiert, zum Reinigen beispielsweise in ein Servicezentrum. Nach einem Abstellen des Fahrzeugs in einer vorgegebenen Position werden die Fahrzeugtüren des Fahrzeugs geöffnet (vgl. z.B. Fig. 3). Anschließend wird das Verfahren zum Reinigen des Fahrzeugs gestartet 100.

In einem Verfahrensschritt 101 wird ein Reinigungsroboter mittels eines Kopplungsmittels an ein komplementäres Kopplungsmittel eines Positionierroboters angekoppelt, das heißt es wird eine lösbare mechanische Verbindung ausgebildet, beispielsweise in Form einer Rastverbindung. Es kann beispielsweise vorgesehen sein, dass der Positionierroboter hierzu einen geeigneten Reinigungsroboter aus einem Magazin auswählt und den ausgewählten Reinigungsroboter nach dem Ankoppeln mittels eines Führungsmittels aus dem Magazin entnimmt.

In einem Verfahrensschritt 102 wird der angekoppelte Reinigungsroboter in den Innenraum des Fahrzeugs eingebracht. Hierzu bewegt der Positionierroboter das Führungsmittel, beispielsweise einen Führungsarm, durch die geöffnete Fahrzeugtür und transportiert den Reinigungsroboter hierdurch in den Innenraum hinein.

Der eingebrachte Reinigungsroboter wird anschließend in einem Verfahrensschritt 103 im Innenraum angeordnet und beispielsweise mittels eines Befestigungsmittels an komplementären Befestigungsmitteln des Fahrzeugs befestigt. Zeitgleich kann in einem Verfahrensschritt 104 eine Schnittstelle des Reinigungsroboters mit einer Schnittstelle des Fahrzeugs verbunden werden, sodass dem Reinigungsroboter von dem Fahrzeug über die Schnittstelle Energie und/oder mindestens ein Reinigungsmedium und/oder eine Kommunikation mit dem Fahrzeug und/oder mindestens eine Entsorgung bereitgestellt werden kann.

In einem Verfahrensschritt 105 wird der Positionierroboter wieder von dem Reinigungsroboter abgekoppelt, indem die mechanische Verbindung zwischen den Kopplungsmitteln wieder gelöst wird, beispielsweise indem die Rastverbindung gelöst wird.

In einem Verfahrensschritt 106 wird anschließend ein vorgegebenes Reinigungsprogramm von dem Reinigungsroboter durchgeführt. Dieses kann beispielsweise ein Absaugen von Schmutzpartikeln und/oder Staub in einem Bereich des Innenraums und/oder ein Aufnehmen und Sammeln von Müll und Gegenständen umfassen. Der Reinigungsroboter umfasst hierzu geeignete Reinigungswerkzeuge, beispielsweise eine Absaugdüse und/oder ein Greifwerkzeug.

Ist das vorgegebene Reinigungsprogramm durchlaufen, so koppelt der Positionierroboter in einem Verfahrensschritt 107 das Führungsmittel wieder über das komplementäre Kopplungsmittel an das Kopplungsmittel des Reinigungsroboters, löst die mechanische Verbindung zwischen den Befestigungsmitteln und gegebenenfalls die Verbindung zwischen den Schnittstellen.

In einem nachfolgenden Verfahrensschritt 108 wird der Reinigungsroboter wieder aus dem Innenraum des Fahrzeugs entfernt, indem das Führungsmittel des Positionierroboters zusammen mit dem angekoppelten Reinigungsroboter aus dem Innenraum geführt wird.

Anschließend ist das Verfahren beendet 109.

### Bezugszeichenliste

- 1: Reinigungsroboter
- 2: Reinigungswerkzeug
- 3: Führungsmittel
- 4: Kopplungsmittel
- 5: Führungsarm
- 6: Befestigungsmittel
- 7: Schnittstelle
- 10: Positionierroboter
- 11: Führungsmittel
- 12: komplementäres Kopplungsmittel
- 13: bewegbare Basiseinrichtung
- 14: Rad
- 20: Energie
- 21: Reinigungsmedium
- 22: Kommunikation
- 23: Entsorgung
- 30: System
- 50: Fahrzeug
- 51: Innenraum
- 52: komplementäres Befestigungsmittel
- 53: Fahrzeugboden
- 54: Säule
- 55: Seite
- 56: Schnittstelle
- 100-109: Verfahrensschritte

## Patentansprüche

1. Verfahren zum Reinigen eines Innenraums (51) eines Fahrzeugs (50), umfassend die Schritte:
Einbringen mindestens eines Reinigungsroboters (1) in den Innenraum (51) des Fahrzeugs (50) mittels mindestens eines Positionierroboters (10), wobei der mindestens eine Reinigungsroboter (1) an einer vorgegebenen Position im Innenraum (51) des Fahrzeugs (50) angeordnet wird,
Durchführen mindestens eines vorgegebenen Reinigungsprogramms mittels des mindestens einen Reinigungsroboters (1) im Innenraum (51) des Fahrzeugs (50),
Entfernen des mindestens einen Reinigungsroboters (1) aus dem Innenraum (51) des Fahrzeugs (50) mittels des mindestens einen Positionierroboters (10),
wobei zum Einbringen und Entfernen mindestens ein Kopplungsmittel (4) des mindestens einen Reinigungsroboters (1) mit einem komplementären Kopplungsmittel (12) des Positionierroboters (10) auf lösbare Weise mechanisch verbunden wird.

2. Verfahren nach Anspruch 1, **dadurch gekennzeichnet, dass** das Einbringen des mindestens einen Reinigungsroboters (1) in das Fahrzeug (50) ein lösbares mechanisches Verbinden des mindestens einen Reinigungsroboters (1) mittels eines Befestigungsmittels (6) mit einem in dem Fahrzeug (50) angeordneten komplementären Befestigungsmittel (52) umfasst.

3. Verfahren nach Anspruch 1 oder 2, **dadurch gekennzeichnet, dass** dem mindestens einen Reinigungsroboter (1) von dem Fahrzeug (50) über mindestens eine Schnittstelle (7, 56) Energie (20) und/oder mindestens ein Reinigungsmedium (21) und/oder eine Kommunikation (22) mit dem Fahrzeug (50) und/oder mindestens eine Entsorgung (23) bereitgestellt wird.

4. Verfahren nach einem der Ansprüche 1 bis 3, **dadurch gekennzeichnet, dass** zusätzlich zum Reinigen des Innenraums (51) mindestens eine weitere Tätigkeit im Innenraum (51) des Fahrzeugs (50) mittels des mindestens einen Reinigungsroboters (1) durchgeführt wird.

5. Reinigungsroboter (1) zum Reinigen eines Innenraums (51) eines Fahrzeugs (50), umfassend:
mindestens ein Reinigungswerkzeug (2),
mindestens ein Führungsmittel (3) zum Führen des Reinigungswerkzeugs (2), und mindestens ein Kopplungsmittel (4),
wobei das mindestens eine Kopplungsmittel (4) derart ausgebildet ist, dass der Reinigungsroboter (1) mit einem komplementären Kopplungsmittel (12) eines Positionierroboters (10) lösbar mechanisch verbunden werden kann und von dem Positionierroboter (10) an einer vorgegebenen Position im Innenraum (51) des Fahrzeugs (50) angeordnet werden kann.

6. Reinigungsroboter (1) nach Anspruch 5, **dadurch gekennzeichnet, dass** das mindestens eine Führungsmittel (3) einen Führungsarm (5) umfasst.

7. Reinigungsroboter (1) nach Anspruch 5 oder 6, **gekennzeichnet durch** mindestens ein Befestigungsmittel (6), wobei das mindestens eine Befestigungsmittel (6) derart ausgebildet ist, dass der Reinigungsroboter (1) mit einem im Fahrzeug (50) angeordneten komplementären Befestigungsmittel (52) auf lösbare Weise mechanisch verbunden werden kann.

8. Reinigungsroboter (1) nach einem der Ansprüche 5 bis 7, **gekennzeichnet durch** mindestens eine Schnittstelle (7) zum Empfangen von Energie (20) und/oder mindestens einem Reinigungsmedium (21) und/oder einer Kommunikation (22) mit dem Fahrzeug (50) und/oder mindestens einer Entsorgung (23) von dem Fahrzeug (50).

9. Positionierroboter (10), umfassend:
mindestens ein Führungsmittel (11) zum Einbringen und Anordnen mindestens eines Reinigungsroboters (1) an einer vorgegebenen Position in einem Innenraum (51) eines Fahrzeugs (50),
wobei das mindestens eine Führungsmittel (11) mindestens ein komplementäres Kopplungsmittel (12) umfasst, welches mit einem Kopplungsmittel (4) des mindestens einen Reinigungsroboters (1) auf lösbare Weise mechanisch verbunden werden kann.

10. Positionierroboter (10) nach Anspruch 9, **gekennzeichnet durch** eine bewegbare Basiseinrichtung (13), wobei das mindestens eine Führungsmittel (11) auf der bewegbaren Basiseinrichtung (13) angeordnet und mit dieser verbunden ist, sodass das mindestens eine Führungsmittel (11) außerhalb des Fahrzeugs (50) zusammen mit der Basiseinrichtung (13) bewegt werden kann.

11. System (30) zum Reinigen eines Innenraums (51) eines Fahrzeugs (50), umfassend: mindestens einen Reinigungsroboter (1) nach einem der Ansprüche 5 bis 8 und mindestens einen Positionierroboter (10) gemäß einem der Ansprüche 9 oder 10.

## Claims

1. Method for cleaning an interior (51) of a motor vehicle (50), comprising the steps of:
introducing at least one cleaning robot (1) into the interior (51) of the vehicle (50) by means of at least one positioning robot (10), wherein the at least one cleaning robot (1) is arranged at a predetermined position in the interior (51) of the vehicle (50),
performing at least one predetermined cleaning program by means of the at least one cleaning robot (1) in the interior (51) of the vehicle (50), removing the at least one cleaning robot (1) from the interior (51) of the vehicle (50) by means of the at least one positioning robot (10),
wherein, for introducing and removing, at least one coupling means (4) of the at least one cleaning robot (1) is mechanically connected in a detachable manner to a complementary coupling means (12) of the positioning robot (10).

2. Method according to claim 1, **characterized in that** the introduction of the at least one cleaning robot (1) into the vehicle (50) comprises detachable mechanical connection of the at least one cleaning robot (1) by means of a fastening means (6) to a complementary fastening means (52) arranged in the vehicle (50).

3. Method according to claim 1 or 2, **characterized in that** energy (20) and/or at least one cleaning medium (21) and/or communication (22) with the vehicle (50) and/or at least one disposal means (23) is provided to the at least one cleaning robot (1) by the vehicle (50) via at least one interface (7, 56).

4. Method according to any of claims 1 to 3, **characterized in that,** in addition to cleaning the interior (51), at least one further activity in the interior (51) of the vehicle (50) is carried out by means of the at least one cleaning robot (1).

5. Cleaning robot (1) for cleaning an interior (51) of a vehicle (50), comprising:
at least one cleaning tool (2),
at least one guide means (3) for guiding the cleaning tool (2), and
at least one coupling means (4),
wherein the at least one coupling means (4) is designed such that the cleaning robot (1) can be detachably mechanically connected to a complementary coupling means (12) of a positioning robot (10) and can be arranged by the positioning robot (10) at a predetermined position in the interior (51) of the vehicle (50).

6. Cleaning robot (1) according to claim 5, **characterized in that** the at least one guide means (3) comprises a guide arm (5).

7. Cleaning robot (1) according to claim 5 or 6, **characterized by** at least one fastening means (6), the at least one fastening means (6) being designed such that the cleaning robot (1) can be mechanically connected in a detachable manner to a complementary fastening means (52) arranged in the vehicle (50).

8. Cleaning robot (1) according to any of claims 5 to 7, **characterized by** at least one interface (7) for receiving energy (20) and/or at least one cleaning medium (21) and/or communication (22) with the vehicle (50) and/or at least one disposal means (23) from the vehicle (50).

9. Positioning robot (10) comprising:
at least one guide means (11) for introducing and arranging at least one cleaning robot (1) at a predetermined position in an interior (51) of a vehicle (50),
wherein the at least one guide means (11) comprises at least one complementary coupling means (12) which can be mechanically connected in a detachable manner to a coupling means (4) of the at least one cleaning robot (1).

10. Positioning robot (10) according to claim 9, **characterized by** a movable base device (13), the at least one guide means (11) being arranged on and connected to the movable base device (13) so that the at least one guide means (11) can be moved outside the vehicle (50) together with the base device (13).

11. System (30) for cleaning an interior (51) of a vehicle (50), comprising:
at least one cleaning robot (1) according to any of claims 5 to 8, and
at least one positioning robot (10) according to either claim 9 or 10.

## Revendications

1. Procédé pour le nettoyage d'un habitacle (51) d'un véhicule (50), comprenant les étapes de :
introduction d'au moins un robot de nettoyage (1) dans l'habitacle (51) du véhicule (50) au moyen d'au moins un robot de positionnement (10), dans lequel l'au moins un robot de nettoyage (1) est agencé au niveau d'une position prédéfinie dans l'habitacle (51) du véhicule (50),
réalisation d'au moins un programme de nettoyage prédéfini au moyen de l'au moins un robot de nettoyage (1) dans l'habitacle (51) du véhicule (50), retrait de l'au moins un robot de nettoyage (1) de l'habitacle (51) du véhicule (50) au moyen de l'au moins un robot de positionnement (10),
dans lequel pour l'introduction et le retrait, au moins un moyen d'accouplement (4) de l'au moins un robot de nettoyage (1) est relié mécaniquement avec un moyen d'accouplement complémentaire (12) du robot de positionnement (10) de manière détachable.

2. Procédé selon la revendication 1, **caractérisé en ce que** l'introduction de l'au moins un robot de nettoyage (1) dans le véhicule (50) comprend une liaison mécanique détachable de l'au moins un robot de nettoyage (1) au moyen d'un moyen de fixation (6) avec un moyen de fixation complémentaire (52) agencé dans le véhicule (50).

3. Procédé selon la revendication 1 ou 2, **caractérisé en ce que** de l'énergie (20) et/ou au moins un produit de nettoyage (21) et/ou une communication (22) avec le véhicule (50) et/ou au moins une décharge (23) est/sont fourni(s) à l'au moins un robot de nettoyage (1) depuis le véhicule (50) par l'intermédiaire d'au moins une interface (7, 56).

4. Procédé selon l'une des revendications 1 à 3, **caractérisé en ce qu'**en plus, pour le nettoyage de l'habitacle (51), au moins une autre activité est réalisée dans l'habitacle (51) du véhicule (50) au moyen de l'au moins un robot de nettoyage (1).

5. Robot de nettoyage (1) pour le nettoyage d'un habitacle (51) d'un véhicule (50), comprenant :
au moins un outil de nettoyage (2),
au moins un moyen de guidage (3) pour le guidage de l'outil de nettoyage (2) et
au moins un moyen d'accouplement (4),
dans lequel l'au moins un moyen d'accouplement (4) est conçu de telle sorte que le robot de nettoyage (1) peut être relié mécaniquement de manière détachable avec un moyen d'accouplement complémentaire (12) d'un robot de positionnement (10) et agencé par le robot de positionnement (10) au niveau d'une position prédéfinie dans l'habitacle (51) du véhicule (50).

6. Robot de nettoyage (1) selon la revendication 5, **caractérisé en ce que** l'au moins un moyen de guidage (3) comprend un bras de guidage (5).

7. Robot de nettoyage (1) selon la revendication 5 ou 6, **caractérisé par** au moins un moyen de fixation (6), dans lequel l'au moins un moyen de fixation (6) est conçu de telle sorte que le robot de nettoyage (1) peut être relié mécaniquement de manière détachable avec un moyen de fixation complémentaire (52) agencé dans le véhicule (50).

8. Robot de nettoyage (1) selon l'une des revendications 5 à 7, **caractérisé par** au moins une interface (7) pour la réception d'énergie (20) et/ou d'au moins un produit de nettoyage (21) et/ou d'une communication (22) avec le véhicule (50) et/ou d'au moins une décharge (23) du véhicule (50).

9. Robot de positionnement (10) comprenant :
au moins un moyen de guidage (11) pour l'introduction et l'agencement d'au moins un robot de nettoyage (1) au niveau d'une position prédéfinie dans l'habitacle (51) d'un véhicule (50),
dans lequel l'au moins un moyen de guidage (11) comprend au moins un moyen d'accouplement complémentaire (12), qui peut être relié mécaniquement de manière détachable avec un moyen d'accouplement (4) de l'au moins un robot de nettoyage (1).

10. Robot de positionnement (10) selon la revendication 9, **caractérisé par** un dispositif de base mobile (13), dans lequel l'au moins un moyen de guidage (11) est agencé sur le dispositif de base mobile (13) et est relié à celui-ci, de telle sorte que l'au moins un moyen de guidage (11) peut être déplacé en dehors du véhicule (50) conjointement avec le dispositif de base (13).

11. Système (30) pour le nettoyage d'un habitacle (51) d'un véhicule (50), comprenant :
au moins un robot de nettoyage (1) selon l'une des revendications 5 à 8 et
au moins un robot de positionnement (10) selon l'une des revendications 9 ou 10.
